# EUROPEAN PATENT APPLICATION

(11) **EP 4 683 250 A1**
(43) Date of publication of application: **21.01.2026**
(21) Application number: 25189214.7
(22) Date of filing: 14.07.2025
(51) Int. Cl.: H04B 10/50, H04B 1/00

(54) **CLOCK CALIBRATION AND TEMPERATURE TRACKING FOR ELECTRO-OPTICAL TRANSMITTERS**

(30) Priority: 18.07.2024 US 202418777363
(71) Applicant: Cisco Technology, Inc., San Jose, CA 95134-1706 (US)
(72) Inventor: Booth, Richard V. H., Sane Jose,, 95134-1706 (US); Appel, Craig S., San Jose, 95134-1706 (US); Metz, Peter C., San Jose, 95134-1706 (US)
(74) Representative: Noble, Nicholas

(57) **Abstract**

Techniques for optical communication include transmitting a calibration pattern in an electro-optical transmitter, and tapping an output of a modulator driver of the electro-optical transmitter, the output generated based on the transmitted calibration pattern. The techniques further include determining one or more calibration parameters relating to an in-phase clock (ICLK) and quadrature clock (QCLK) for the electro-optical transmitter, based on the tapped output, and calibrating at least one of the ICLK or QCLK based on the determined one or more calibration parameters.

## Description

### TECHNICAL FIELD

Embodiments presented in this disclosure generally relate to optical communications. More specifically, embodiments disclosed herein relate to electro-optical transmitters.

### BACKGROUND

Electro-optical transmitters (e.g., pulse amplitude modulation 4-level (PAM4) drivers) commonly drive multiple outputs (e.g., three outputs for a PAM4 transmitter), each assigned to one modulating segment (e.g., a lane) on an optical integrated circuit (IC). Each of these outputs are derived from data which is delivered to a respective serializer (e.g., from a set of three serializers). Each pair of data bits is thermometer-encoded to three output bits. To synchronize each of the serializers, a set of in-phase and quadrature clocks are duty-cycle and quadrature phase corrected, as well as phase aligned. Also, the three output lanes are typically optically aligned, and optical delays as the light travels through the modulator are adjusted for. Calibration of these clocks, both during manufacturing prior to operation and during ongoing operation with data transmission, is very challenging, particularly where calibration is done across temperatures.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
Figures 1A-B illustrate an electro-optical transmitter with clock calibration, according to one embodiment.
Figure 2 is a block diagram illustrating a controller for clock calibration for an electro-optical transmitter, according to one embodiment.
Figure 3 is a flowchart illustrating clock calibration for an electro-optical transmitter, according to one embodiment.
Figure 4A is a flowchart illustrating transmitting a calibration pattern, according to one embodiment.
Figures 4B illustrates example calibration patterns, according to one embodiment.
Figures 4C-G illustrate applications of example calibration patterns, according to one embodiment.
Figure 5 illustrates determining and applying calibration based on tapped output, according to one embodiment.
Figures 6A-D illustrate clock orientation for duty cycle, quadrature, and lane-to-lane skew calibration, according to one embodiment.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

Embodiments include a method. The method includes transmitting a calibration pattern in an electro-optical transmitter and tapping an output of a modulator driver of the electro-optical transmitter, the output generated based on the transmitted calibration pattern. The method further includes determining one or more calibration parameters relating to an in-phase clock (ICLK) and quadrature clock (QCLK) for the electro-optical transmitter, based on the tapped output, and calibrating at least one of the ICLK or QCLK based on the determined one or more calibration parameters.

Embodiments further include an electro-optical transmitter, including one or more processors and one or more memories storing a program, which, when executed on any combination of the one or more processors, performs operations. The operations include transmitting a calibration pattern in the electro-optical transmitter and tapping an output of a modulator driver of the electro-optical transmitter, the output generated based on the transmitted calibration pattern. The operations further include determining one or more calibration parameters relating to an in-phase clock (ICLK) and quadrature clock (QCLK) for the electro-optical transmitter, based on the tapped output, and calibrating at least one of the ICLK or QCLK based on the determined one or more calibration parameters.

Embodiments further include a non-transitory computer-readable medium containing computer program code that, when executed by operation of one or more computer processors, performs operations. The operations include transmitting a calibration pattern in an electro-optical transmitter and tapping an output of a modulator driver of the electro-optical transmitter, the output generated based on the transmitted calibration pattern. The operations further include determining one or more calibration parameters relating to an in-phase clock (ICLK) and quadrature clock (QCLK) for the electro-optical transmitter, based on the tapped output, and calibrating at least one of the ICLK or QCLK based on the determined one or more calibration parameters.

### EXAMPLE EMBODIMENTS

In an embodiment, clock calibration for electro-optical transmitters (e.g., PAM4 transmitters) can be improved using one or more techniques discussed below. For example, a circuit can be controlled by firmware that uses distinct fixed patterns for calibration. This can include intra-lane calibration (e.g., duty-cycle and quadrature (e.g., I/Q skew) calibration) and inter-lane calibration (e.g., lane-to-lane alignment). In an embodiment, the firmware controller uses lower-frequency to perform calibration, which avoids bandwidth-limiting signal detection.

In an embodiment, this is an improvement over existing techniques that use high-frequency clocks themselves to detect duty-cycle, which can cause multiple issues. For example, using high-frequency clock can create bandwidth issues and cause errors in duty-cycle detection. Further, the signals of interest for duty-cycle detection are at the output-side of the driver, which can differ from those at the input-side of the driver (e.g., the clocks themselves). One or more embodiments disclosed herein improve on existing techniques by using lower-frequency patterns (e.g., to avoid bandwidth issues) and detecting duty cycle at the end of the driver (e.g., rather than at the input side of the driver using the clocks themselves).

As another example, one or more embodiments use the actual driver for offline calibration (e.g., during manufacturing prior to operation), rather than a replica. This provides for more accurate offline calibration. In an embodiment, this can be combined with calibration using a replica circuit for online calibration (e.g., during operation with data transmission), to avoid using the data paths while the driver is in use. This provides for more accurate offline calibration, using the actual driver, while still allowing for online tuning using replica circuits.

In another example, as discussed above one or more embodiments use firmware to control calibration, rather than specialized duty-cycle or phase-alignment correcting on-board state-machines, as is typically done in existing techniques. The use of firmware, as opposed to state machines, allows for calibration and temperature tracking to be adapted and improved over a product's lifetime.

Another example improvement includes introducing patterns to two lanes at a time (e.g., offset by an optical delay). An optical segment driver typically uses a specific alignment in phase between the signals arriving at the segments. For example, the signals generally do not arrive in synchrony, but account for non-zero optical delay in the optical modulator. To calibrate this, in an embodiment, patterns are introduced to two lanes at a time and offset by the optical delay. A further example improvement uses a single delay stage to perform both quadrature calibration and lane-to-lane skew adjustment. These can be kept independent using two separate independent delay controls, or any other suitable technique.

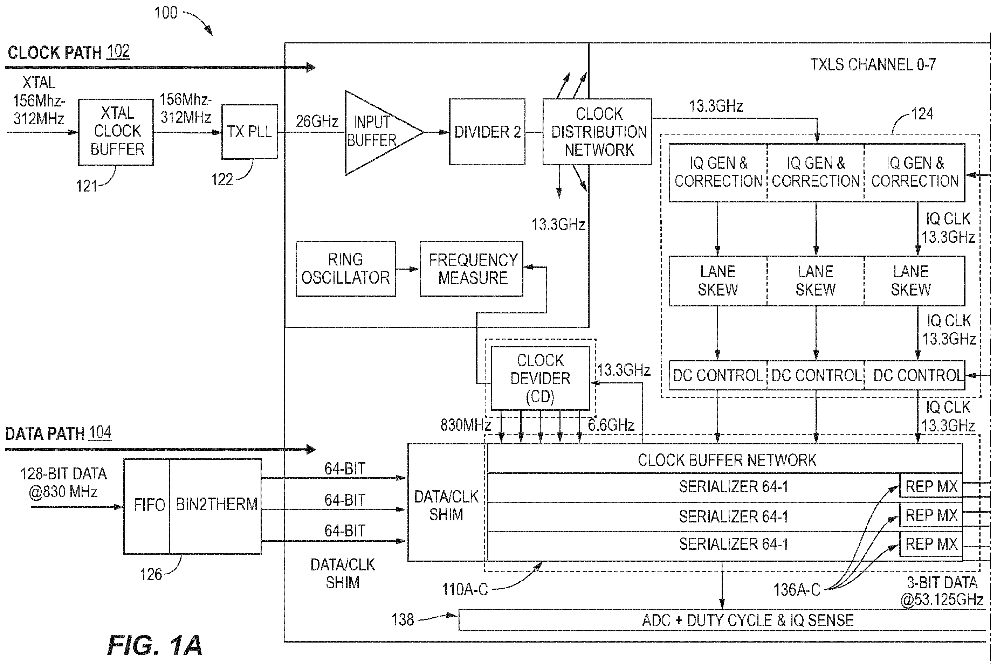

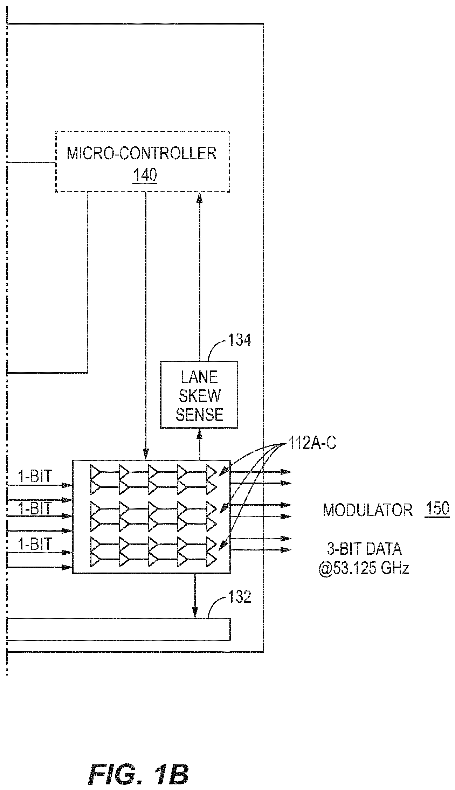

As discussed below in relation to Figures 1A-B, in an embodiment a replica circuit used for online calibration includes the last stages of the serializer and the first stages of the modulator driver (e.g., a Mach-Zehnder Interferometer (MZI) driver). While the tap on the replica is typically not exactly the same as the tap on the driver used for offline calibration, the replica is accurate enough emulate the actual serializer and driver. Further, the replica can be disabled (e.g., if online calibration is not necessary or not used) to keep power dissipation low. Disabling the replica stages, as appropriate, can result in significant power savings.

Any given embodiment discussed below can include any combination of advantages discussed above. Further, while the embodiments herein are discussed in terms of a PAM4 driver, this is merely for illustration. Any suitable modulation can be used, including alternative pulse amplitude modulation (e.g., PAM8, PAM16, or any other suitable pulse amplitude modulation), quadrature modulation, or any other suitable modulation. Further, quadrature is merely one example, and any suitable clock can be used (e.g., eighth frequency clocks with eight phases per clock).

Figures 1A-B illustrate an electro-optical transmitter with clock calibration, according to one embodiment. Figures 1A-B illustrate an example transmitter line-side (TXLS) functional diagram 100 for an electro-optical transmitter (e.g., a PAM4 transmitter). In an embodiment, the TXLS circuitry is made up of 8 channels, each transmitting data (e.g., 100Gbps of data). Each channel is composed of three lanes of data-flow (e.g., using serializers 110A-C) responsible for driving three optical modulator drivers 112A-C, which drive three modulator segments (part of modulator 150).

In an embodiment, a clock signal flows into the TXLS 100 through a clock path 102. The clocking architecture for the TXLS 100 includes a crystal oscillator (XTAL) clock buffer 121 (e.g., operating at 156MHz-312MHz) feeding a transmitter phase-locked loop (PLL) (TX PLL) 122 that provides a clock (e.g., a 26.5625GHz clock) to the TXLS 100. There, the clock is divided by two to generate a divided clock (e.g., a 13.28125GHz clock), which is distributed to eight TXLS channels. Within each channel, three separate TXLS clock-control circuits produce derived clocks from the distributed clock.

In an embodiment, data flows into the TXLS 100 through a data path 104. The derived clocks are used to drive the final stages in the serializers 110A-C in each lane to output data through a modulator 150. In an embodiment, clock-control circuits 124 manage: (1) in-phase clock (ICLK) and quadrature clock (QCLK) generation and maintenance; (2) clock duty-cycle correction and maintenance; (3) relative skew of each pair of lane clocks with respect to the other two lanes. In an embodiment, the in-phase derived clock from a middle lane (e.g., lane 1) is used to generate further divided clocks which are distributed to three lanes. These divided clocks drive the input stages of each serializer 110A-C. In addition, the lowest frequency divided clock is distributed back to a buffer 126 (e.g., a first-in-first-out (FIFO) buffer) outside of the TXLS block, which interfaces between the up-stream data path 104 and the TXLS 100. In an embodiment, the buffer 126 also includes binary to thermometer (BIN2THERM) conversion for the data.

Within each lane, the next to final modulator driver (e.g., MZI driver) stage is tapped at 132 and connected to a low-pass filter. In an embodiment, the signal integrity at this tap point provides for an accurate measurement of the duty-cycle (e.g., more accurate than a tap at the final modulator driver stage). There is less impact from device packaging (e.g., bump, pad, or wirebond parasitics) on the signal integrity (e.g., compared with a tap at the final modulator driver stage). The low-pass filter has three outputs which are monitored: the p-side, n-side and common-mode. In an embodiment, the low-pass filter provides for a readily implementable low-power block that converts time to voltage, so that relatively simple DC voltage measurements can be made. The outputs are submitted (muxed) to an analog-to-digital (A2D) circuit (ADC) 138, which, in an embodiment, is controlled by firmware. For example, a micro-controller 140 can use firmware (e.g., firmware stored with the micro-controller 140) to control the ADC and other aspects of calibration.

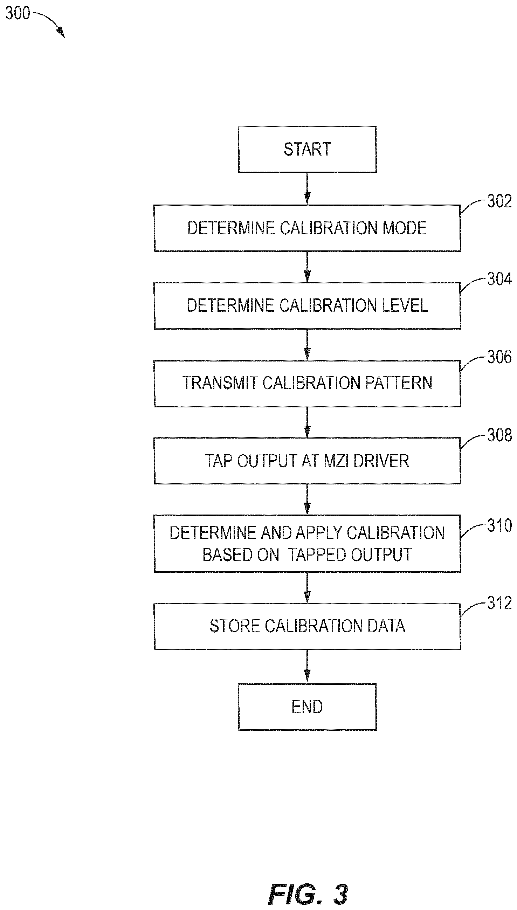

To calibrate duty-cycle, quadrature, and lane-to-lane skew, specific data patterns are transmitted. This is discussed further, below, with respect to Figure 3. In an embodiment, to calibrate clock duty-cycle, data-patterns which respond only to edges of the respective clock are used. To calibrate quadrature, data-patterns which respond to edges of both in-phase and quadrature clock are used. To calibrate skew between lanes, the in-phase clock from one lane and the in-phase clock from another lane are submitted to another low-pass filter at lane skew sense 134.

In an embodiment, to keep the clocks at proper duty-cycle and phase-alignment during operation, a replica of the last stage of the serializer and the first stage of the driver is used. These are illustrated as replicas 136A-C. As is done with calibration, different fixed patterns are introduced to the replicas 136A-C, low-pass filtered, analog-to-digital converted, and used by firmware (e.g., firmware included in the micro-controller 140) to adjust either duty cycle of one clock at a time, or to phase-align the two (in-phase and quadrature) clocks of each individual lane and channel.

After initial offline calibration has been performed, the response of the replica stages 136A-C are stored in a memory (e.g., an electrically erasable programmable read-only memory (EEPROM)) as well as the delay settings acquired from the actual data path (initial offline calibration). During mission-mode, when the data path is not available for delay-stage adjustment, the measured differences in response are retrieved from storage and used to adjust the delay stages, to account for changes in temperature. Thus, differences in the data path and replica path, as well as device mismatch are accounted for in the stored differences.

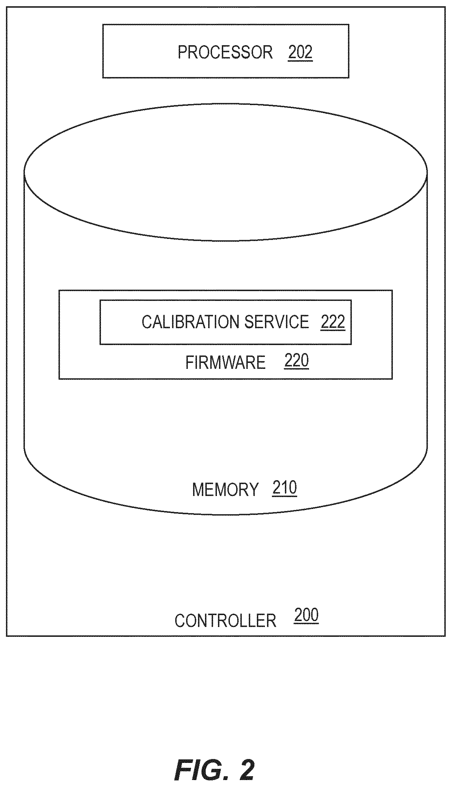

Figure 2 is a block diagram illustrating a controller 200 for clock calibration for an electro-optical transmitter, according to one embodiment. In an embodiment, the controller 200 corresponds with the micro-controller 140 illustrated in Figures 1A-B.

The controller 200 includes a processor 202 and a memory 210. The processor 202 generally retrieves and executes programming instructions stored in the memory 210, including in firmware 220. The processor 202 is representative of a single central processing unit (CPU), multiple CPUs, a single CPU having multiple processing cores, graphics processing units (GPUs) having multiple execution paths, and the like.

Although the memory 210 is shown as a single entity, the memory 210 may include one or more memory devices having blocks of memory associated with physical addresses, such as random access memory (RAM), read only memory (ROM), flash memory, or other types of volatile and/or non-volatile memory.

The memory 210 generally includes program code for performing various functions related to use of the controller 200. The program code is generally described as various functional "applications" or "modules" within the memory 210, although alternate implementations may have different functions and/or combinations of functions. For example, the memory 210 can include the firmware 220, which can include a calibration service 222 to facilitate clock calibration for an electro-optical transmitter (e.g., ICLK and QCLK calibration). This is discussed above in relation to Figures 1A-B and further, below, with regard to Figure 3. While Figure 2 illustrates calibration control in firmware associated with a micro-controller located on the electro-optical transmitter, this is merely an example. The calibration service 222 (or any other suitable software service) can be maintained in any suitable location accessible by the electro-optical transmitter.

Figure 3 is a flowchart 300 illustrating clock calibration for an electro-optical transmitter, according to one embodiment. At block 302 a calibration service (e.g., the calibration service 222 illustrated in Figure 2) determines a calibration mode. In an embodiment, the calibration service can calibrate an electro-optical transmitter (e.g., the TXLS 100 illustrated in Figures 1A-B) offline (e.g., at manufacturing or otherwise outside of operation) or on-line (e.g., during operation or in mission-mode).

For example, the calibration service can calibrate duty cycle, quadrature, and lane-to-lane skew offline, as part of a manufacturing process, before operation of the transmitter. The calibration service can use the data path of the transmitter for calibration, as discussed further below with regard to blocks 306-310, and can store the calibration results for use during operation (e.g., in an EEPROM).

In addition, or alternatively, the calibration service can calibrate the transmitter while the transmitter is online and transmitting data. The calibration service can use a replica circuit for calibration, since the data path is not available, and can detect and adjust duty-cycle and quadrature for each lane in the transmitter. In an embodiment, the calibration service can adjust lane-to-lane skew during offline calibration, but not during online calibration.

At block 304, the calibration service determines a calibration level. In an embodiment, clock delay circuits for the transmitter include duty-cycle and delay stages, each of which includes multiple correction circuits (e.g., coarse, moderate, and fine correction circuits). For example, each clock delay circuit can include a duty-cycle section and a delay subsection. Each of these subsections can be made up of any combination of coarse, moderate, and fine correction circuits.

In an embodiment, the calibration service uses coarse correction first to get close to the target duty-cycle and quadrature (e.g., I/Q skew). The calibration service can then use the moderate and fine correction circuits to get even closer to the target(s). In an embodiment, during circuit operation the calibration service uses only the fine correction to maintain duty-cycle and quadrature. Thus, in one embodiment, offline calibration can include coarse, moderate, and fine correction, while online calibration includes only fine calibration. This is merely an example, and any suitable calibration mode can use any suitable calibration level.

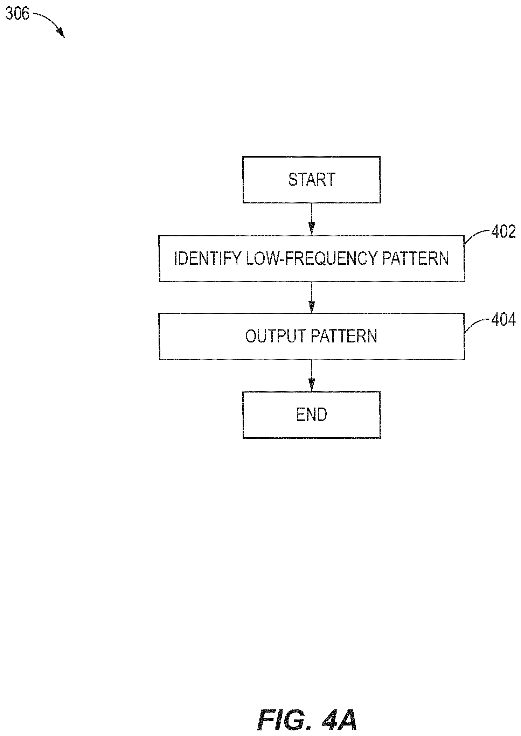

At block 306, the calibration service drives a calibration pattern. In an embodiment, the calibration service drives a pattern to identify duty-cycle and quadrature (e.g., I/Q skew). This is discussed further, below, with regard to Figures 4A-B. For example, during calibration the calibration service could drive a pattern consisting of repeating pairs of one and zeroes (e.g., 0011 and 01100). But this is a relatively high frequency pattern (e.g., the frequency of transition from zero to one is relatively high), which can harm performance (e.g., impacted by bandwidth limitations). In an embodiment, using a lower frequency signal decreases the bandwidth used in the detection path and avoids interference with calibration measurements.

In an embodiment, lane 0 can use a pattern with six zeroes and six ones (e.g., 000000111111 and 100000011111). This can generate transitions in lane 0, while other lanes are stimulated by patterns that stimulate transitions in the respective lane only. In an embodiment, quadrature (e.g., I/Q skew) is detected by sending a lower-frequency pattern (e.g. sending a 000111 pattern on lane 0). Further, in an embodiment, lane-to-lane skew can be detected by sending a pattern that stimulates a signal that is in synch with the in-phase clocks in the two lanes to be compared. The signals on one lane can be delayed by half of the pattern length, so that the measurement tap detects 50% duty-cycle at the target.

At block 308, the calibration service taps the output (e.g., at the MZI driver). In an embodiment, the next to final MZI driver stage is tapped and connected to a low-pass filter. For example, this is illustrated at 132 in Figures 1A-B, above. This can provide a significant improvement over alternative solutions (e.g., tapping the ICLK and QCLK input to the driver), because it provides for a more accurate measurement of the accuracy of the driver itself. In an embodiment, during offline calibration the calibration service taps the data path, while during online calibration the calibration service taps a replica path. For example, during online calibration the calibration service can tap a replica of the serializer and first stage of the driver (e.g., Rep MX 136A-C illustrated in Figures 1A-B) to avoid impact on data transmission.

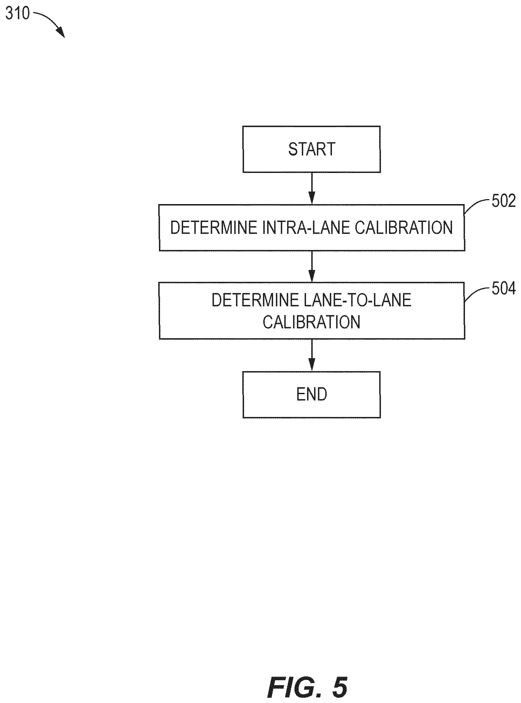

At block 310, the calibration service determines and applies calibration based on the tapped output. As discussed above, measured parameters from the tapped output are used for calibration. This is discussed further, below, with regard to Figure 5. For example, to calibrate clock duty-cycle, data-patterns which respond only to edges of the respective clock are used. To calibrate quadrature, data-patterns which respond to edges of both in-phase and quadrature clock are used. To calibrate skew between lanes, the in-phase clock from one lane and the in-phase clock from another lane are used (e.g., submitted to a low-pass filter).

At block 312, the calibration service stores calibration data. In an embodiment, after calibration has been performed, the response of the replica stages are stored in EEPROM as well as the delay settings acquired from the actual data path. During online calibration, when the data path is not available for delay-stage adjustment, the measured differences in response are retrieved and used to adjust the delay stages, to account for changes in temperature. Thus, differences in the data path and replica path, as well as device mismatch are accounted for in the stored differences. In an embodiment, the offline calibration mode works, directly and only, with the main data path. Online calibration uses saved data from offline calibration mode and compares the saved data to results of the online mode replica circuit measurement, which, in an embodiment, is only used to account for temperature changes.

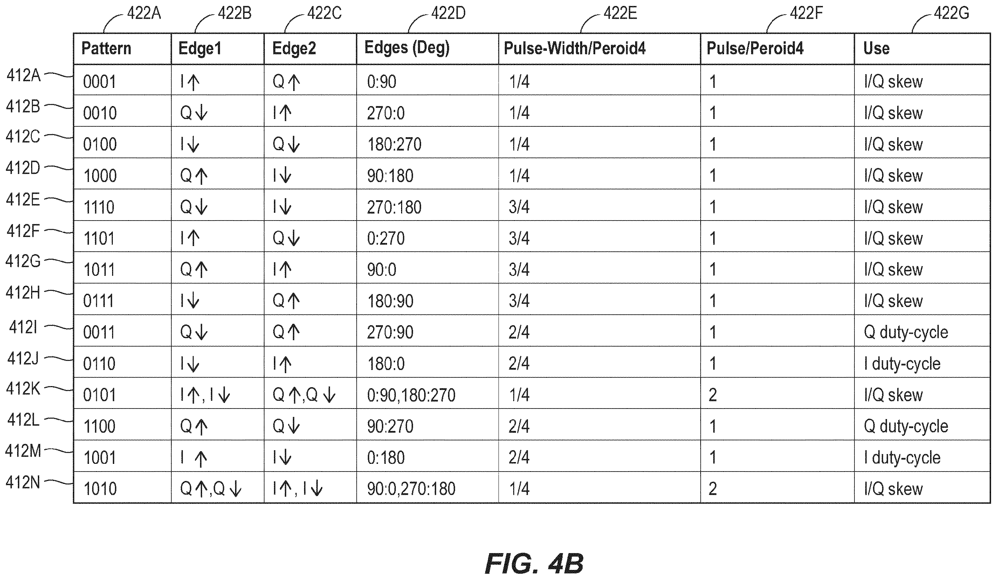

Figure 4A is a flowchart illustrating transmitting a calibration pattern, according to one embodiment. In an embodiment, Figure 4A corresponds with block 306 illustrated in Figure 3, above. At block 402 a calibration service (e.g., the calibration service 222 illustrated in Figure 2) identifies and transmits a low frequency pattern. In an embodiment, a lower frequency pattern (e.g., lower frequency in transitions between zeroes and ones) improves performance by decreasing the bandwidth required in the detection path and avoids interference with calibration measurements. Example patterns are illustrated further, below, with regard to Figures 4B-G.

At block 404, the calibration service outputs the pattern. For example, four-bit patterns can be used when in online mode (e.g., by a replica circuit), when the data path cannot be used to adjust duty-cycle or quadrature. Longer bit-patterns for duty-cycle and quadrature can be used during calibration to eliminate problems with bandwidth. As one example, for duty-cycle, 0011 and 0110 can be used. For quadrature, two 4-bit patterns can be used and the calibration service can combine the results to achieve a more accurate measurement, reducing bandwidth limitation effects. These two patterns can be, in one example, 0001 and 1011, as shown in the table. The two patterns generate a single pulse out of 4, so the signal achieves full range. Combining these patterns together can provide an accurate representation of quadrature.

Figure 4B illustrates example calibration patterns, for one of the three segment drivers, according to one embodiment. In an embodiment, a table illustrates example patterns 412A-N used to drive calibration. A column 422A illustrates the pattern (e.g., in ones and zeroes). A column 422B illustrates a first edge, while a column 422C illustrates a second edge and a column 422D illustrates the orientation of the edges in degrees. A column 422E illustrates a pulse-width per period and a column 422F illustrates pulses per period. Finally, a column 422G illustrates an example use for the pattern (e.g., I/Q skew, Q duty cycle, or I duty cycle).

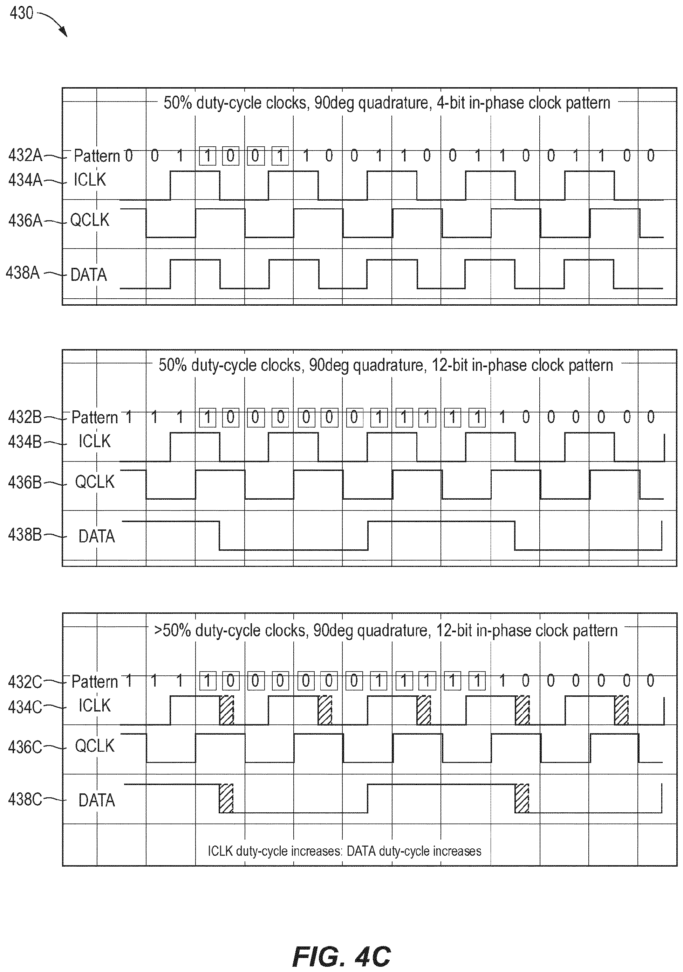

Figures 4C-E illustrate application of example off-line calibration patterns, according to one embodiment. In an embodiment, Figure 4C illustrates in-phase clock patterns for offline calibration. For example a table 430 illustrates a pattern used with 50% duty-cycle clocks and 90 degree quadrature. A four bit in-phase clock pattern 432A (e.g., 0110) is output as data 438A, driving ICLK values 434A and QCLK values 436A. A 12 bit in-phase clock pattern 432B (e.g., 100000011111) is as data 438B, driving ICLK values 434B and QCLK values 436B. A 12 bit in-phase clock pattern 432C (e.g., 100000011111) is output as data 438C, driving ICLK values 434C and QCLK values 436C.

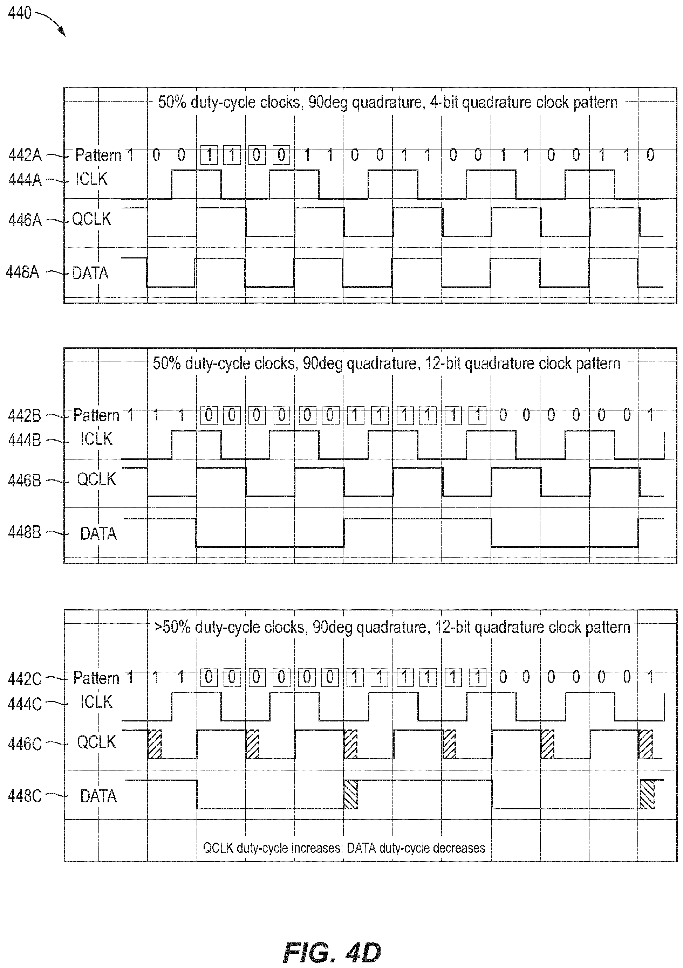

In an embodiment, Figure 4D illustrates quadrature clock patterns for offline calibration. For example a table 440 illustrates a pattern used with 50% duty-cycle clocks and 90 degree quadrature. A four bit quadrature clock pattern 442A (e.g., 0011) is output as data 448A, driving ICLK values 444A and QCLK values 446A. A 12 bit quadrature clock pattern 442B (e.g., 000000111111) is output as data 448B, driving ICLK values 444B and QCLK values 446B. A 12 bit quadrature clock pattern 442C (e.g., 000000111111) is output as data 448C, driving ICLK values 444C and QCLK values 446C.

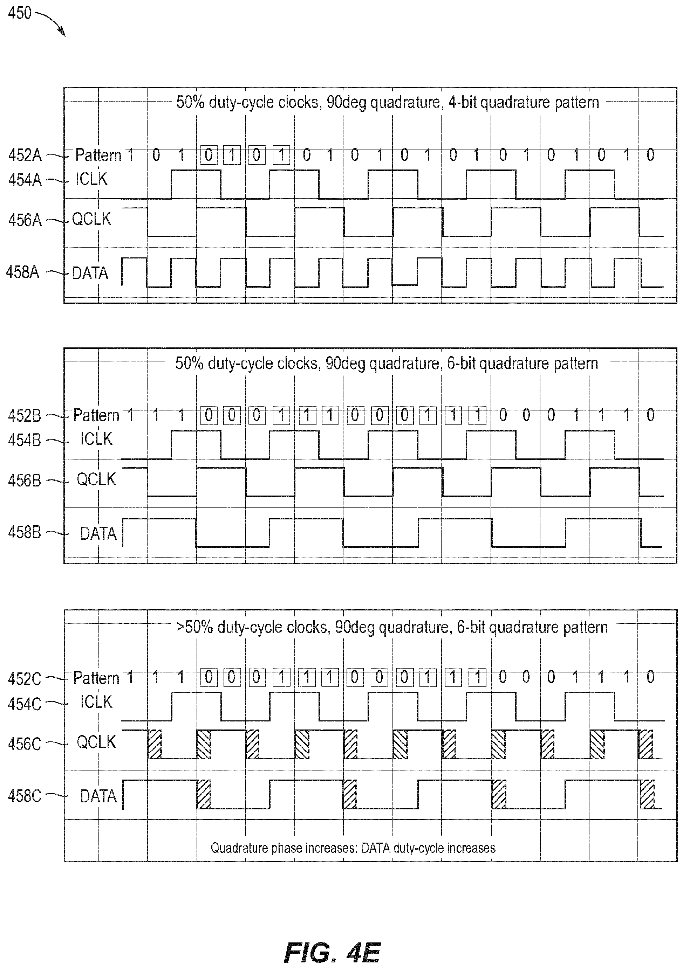

In an embodiment, Figure 4E illustrates quadrature patterns for offline calibration. For example a table 450 illustrates a pattern used 50% duty-cycle clocks and 90 degree quadrature. A four bit quadrature pattern 452A (e.g., 0101) is output as data 458A, driving ICLK values 454A and QCLK values 456A. A six bit quadrature pattern 452B (e.g., 000111) is output as data 458B, driving ICLK values 454B and QCLK values 456B. A six bit quadrature pattern 452C (e.g., 000111) is output as data 458C, driving ICLK values 454C and QCLK values 456C.

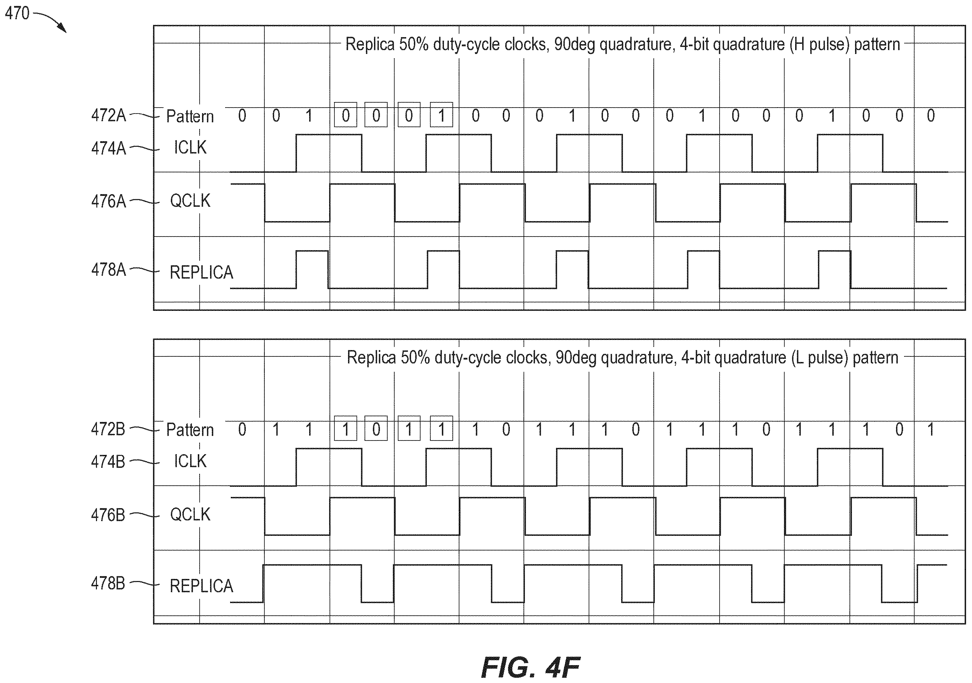

Figures 4F-G illustrate application of example on-line calibration patterns (e.g., using a replica circuit), according to one embodiment. Figure 4F illustrates application of example calibration patterns, according to one embodiment. For example a table 470 illustrates a pattern used with a replica circuit with 50% duty-cycle clocks, 90 degree quadrature, and a four bit-quadrature pattern. A four bit H-pulse pattern 472A (e.g., 0001) is output by the replica circuit as values 478A, driving ICLK values 474A and QCLK values 476A. A four bit L-pulse pattern 472B (e.g., 1011) is output by the replica circuit as values 478B, driving ICLK values 474B and QCLK values 476B.

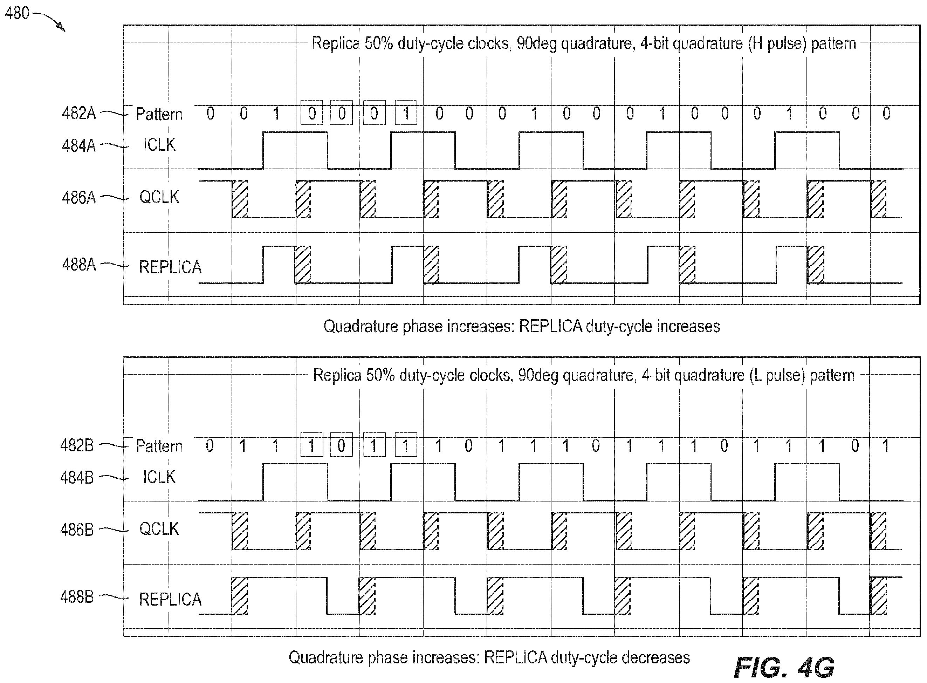

Figure 4G further illustrates application of example calibration patterns, according to one embodiment. For example a table 480 illustrates a pattern used with a replica circuit with 50% duty-cycle clocks, greater than 90 degree quadrature, and a four bit-quadrature pattern. A four bit H-pulse pattern 482A (e.g., 0001) is output by the replica circuit as values 488A, driving ICLK values 484A and QCLK values 486A. As illustrated, the quadrature phase increases and the replica circuit duty cycle increases. Further, a four bit L-pulse pattern 482B (e.g., 1011) is output by the replica circuit as values 488B, driving ICLK values 484B and QCLK values 486B. As illustrated, the quadrature phase increases and the replica circuit duty cycle decreases.

Figure 5 illustrates determining and applying calibration based on tapped output, according to one embodiment. In an embodiment, Figure 5 corresponds with block 310 illustrated in Figure 3. At block 502, a calibration service (e.g., the calibration service 222 illustrated in Figure 2) determines intra-lane calibration. In an embodiment, this includes one or more of duty cycle calibration and quadrature (e.g., I/Q skew) calibration.

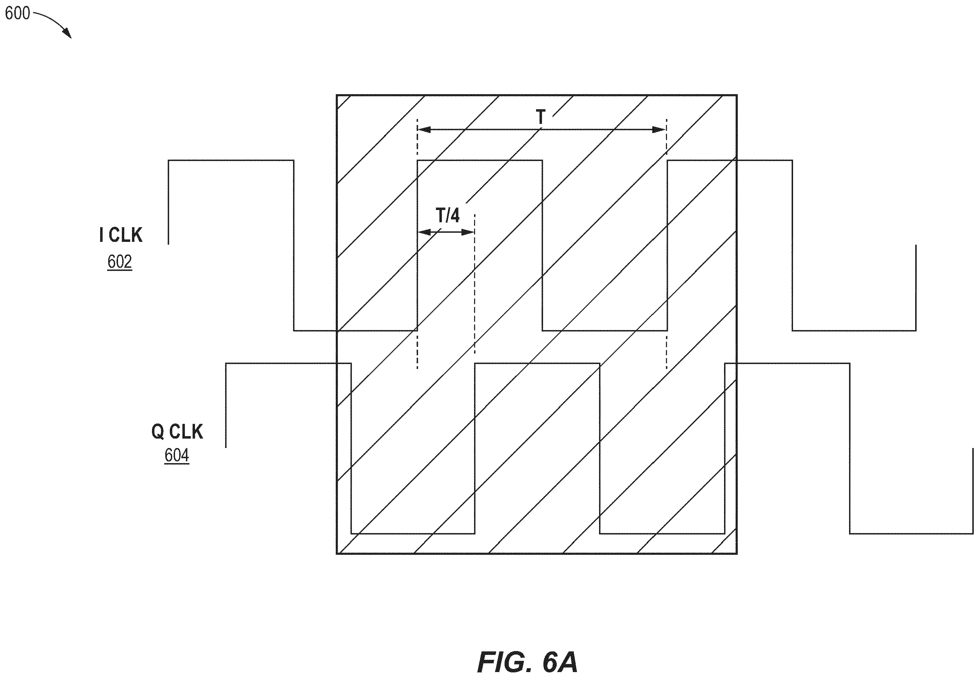

This is illustrated further by Figures 6A-C, which illustrate clock orientation for duty cycle and quadrature calibration, according to one embodiment. Figure 6A illustrates a graph 600 with an ICLK 602 and a QCLK 604. The graph 600 illustrates an example ICLK and QCLK phase relationship, with an example frequency of 13.28125GHz (e.g., for a PAM4 transmitter as discussed above in relationship to Figures 1A-B), a period T of 75.294ps, and quarter period T/4 of 18.823ps. As illustrated, the ICLK 602 and the QCLK 604 have a phase difference of T/4.

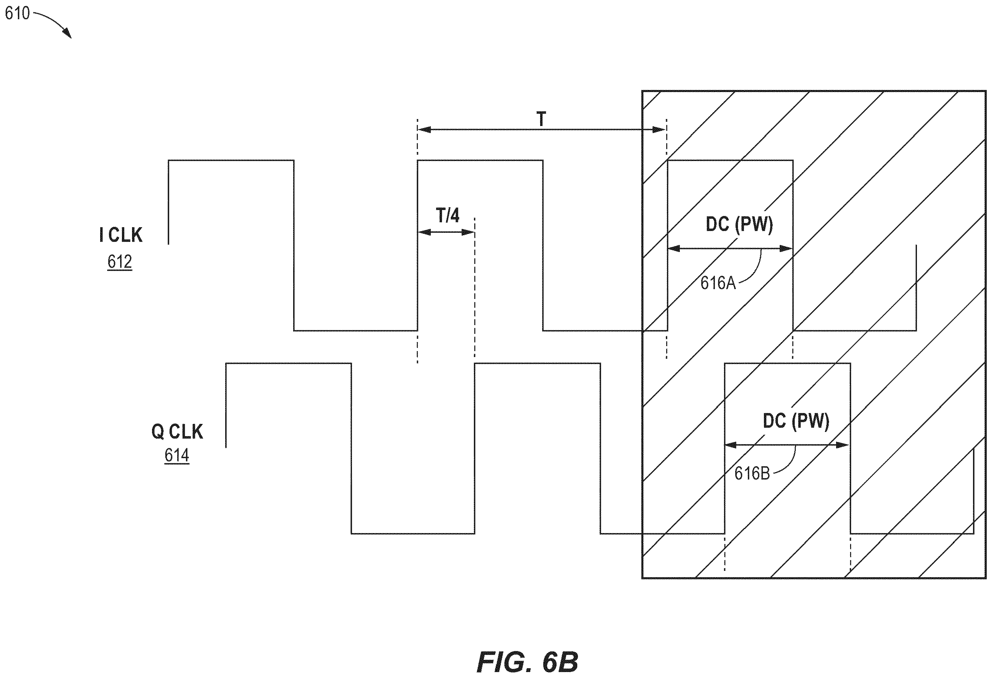

Figure 6B illustrates an ICLK and QCLK path duty cycle adjustment, according to one embodiment. A graph 610 illustrates an ICLK 612 and a QCLK 614. As for Figure 6A, the graph 610 illustrates an example frequency of 13.28125GHz (e.g., for a PAM4 transmitter as discussed above in relationship to Figures 1A-B), a period T of 75.294ps, and quarter period T/4 of 18.823ps. The graph 610 illustrates a duty cycle 616A for the ICLK 612 and a duty cycle 616B for the QCLK 614. As discussed above, the calibration service can correct these duty cycles. For example, the calibration service can use data-patterns which respond only to edges of the respective clocks to calibrate duty cycles.

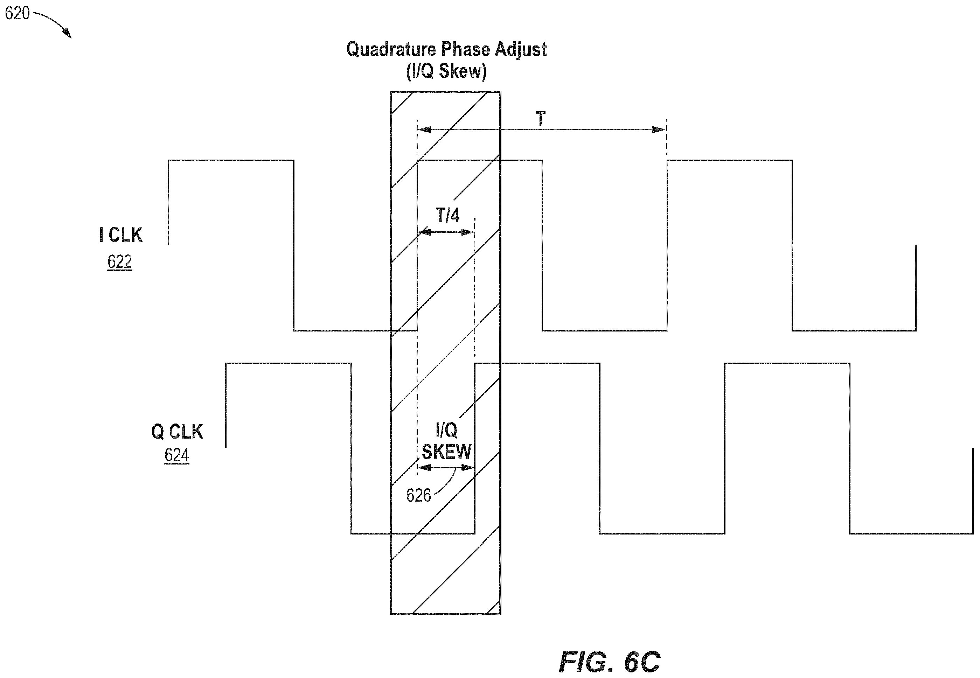

Figure 6C illustrates quadrature phase adjustment (e.g., for I/Q skew), according to one embodiment. A graph 620 illustrates an ICLK 622 and a QCLK 624. As for Figures 6A-B, the graph 620 illustrates an example frequency of 13.28125GHz (e.g., for a PAM4 transmitter as discussed above in relationship to Figures 1A-B), a period T of 75.294ps, and quarter period T/4 of 18.823ps. The graph 620 illustrates an example I/Q skew 626 between the ICLK 622 and the QCLK 624. As discussed above, the calibration service can correct this I/Q skew 626. For example, the calibration service can use data-patterns which respond to edges of both in-phase and quadrature clocks.

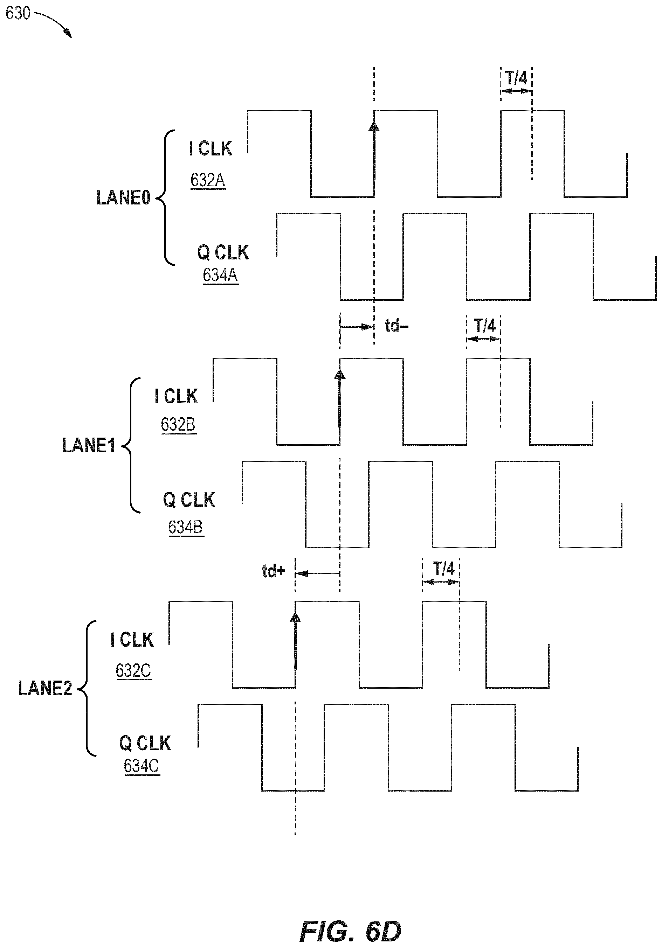

Returning to Figure 5, at block 504 the calibration service determines lane-to-lane calibration. Figure 6D illustrates lane-to-lane skew adjustment, according to one embodiment. A graph 630 illustrates three lanes: LANE0, LANE1, and LANE2. The LANE0 includes an ICLK 632A and a QCLK 634A. The LANE1 includes an ICLK 632B and a QCLK 634B. The LANE2 includes an ICLK632C and a QCLK 634C. As for Figures 6A-C, the graph 620 illustrates an example frequency of 13.28125GHz (e.g., for a PAM4 transmitter as discussed above in relationship to Figures 1A-B), a period T of 75.294ps, and quarter period T/4 of 18.823ps. The graph 630 illustrates lane skew adjustments td- and td+, each of which are on the order of 1ps. As discussed above, the calibration service can calibrate (e.g., correct) these skew adjustments. For example, the calibration service can use the in-phase clock from one and the in-phase clock from another lane to calibrate skew between lanes (e.g., using a low-pass filter).

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

## Claims

1. A method, comprising:
transmitting a calibration pattern in an electro-optical transmitter;
tapping an output of a modulator driver of the electro-optical transmitter, the output generated based on the transmitted calibration pattern;
determining one or more calibration parameters relating to an in-phase clock, ICLK, and quadrature clock, QCLK, for the electro-optical transmitter, based on the tapped output; and
calibrating at least one of the ICLK or QCLK based on the determined one or more calibration parameters.

2. The method of claim 1, wherein the modulator driver comprises a Mach-Zehnder Interferometer, MZI, driver and wherein the tapping is performed at a next to final stage of the MZI driver.

3. The method of claim 1 or 2, wherein the calibrating is performed when the electro-optical transmitter is not transmitting data, the method further comprising:
transmitting a second calibration pattern in the electro-optical transmitter;
identifying a second output for a replica stage in the electro-optical transmitter, the second output generated based on the transmitting the second calibration pattern; and
calibrating, during operation of the electro-optical transmitter, at least one of the ICLK or QCLK based on the identified second output for the replica stage.

4. The method of claim 3, wherein the calibrating, during operation of the electro-optical transmitter, at least one of the ICLK or QCLK based on the identified second output for the replica stage is based on a change in temperature relating to the electro-optical transmitter.

5. The method of claim 3 or 4, further comprising:
storing, in a memory for the electro-optical transmitter, one or more values relating to the calibration parameters determined when the electro-optical transmitter is not transmitting data; and
retrieving, during operation of the electro-optical transmitter, the stored values, wherein the calibrating during operation of the electro-optical transmitter uses the retrieved values.

6. The method of any preceding claim, wherein the calibrating is controlled based on firmware relating to a micro-controller used by the electro-optical transmitter.

7. The method of any preceding claim, wherein transmitting the calibration pattern in the electro-optical transmitter comprises:
identifying a calibration pattern, the calibration pattern comprising a number of bits determined to avoid bandwidth issues for the calibration.

8. The method of claim 7, wherein the electro-optical transmitter comprises a pulse amplitude modulation 4-level (PAM4) driver, and wherein the calibration pattern comprises a four bit pattern.

9. The method of any preceding claim, wherein transmitting the calibration pattern in the electro-optical transmitter comprises:
identifying a calibration pattern, from among a plurality of calibration patterns, based on the calibrating relating to either intra-lane calibration or lane-to-lane skew calibration.

10. The method of any preceding claim, wherein the electro-optical transmitter comprises one or more delay stages, each of the delay stages comprising a coarse correction circuit for coarse calibration and a fine correction circuit for fine calibration.

11. An electro-optical transmitter, comprising:
one or more processors; and
one or more memories storing a program, which, when executed on any combination of the one or more processors, performs operations, the operations comprising:
transmitting a calibration pattern in the electro-optical transmitter;
tapping an output of a modulator driver of the electro-optical transmitter, the output generated based on the transmitted calibration pattern;
determining one or more calibration parameters relating to an in-phase clock, ICLK, and quadrature clock, QCLK, for the electro-optical transmitter, based on the tapped output; and
calibrating at least one of the ICLK or QCLK based on the determined one or more calibration parameters.

12. The electro-optical transmitter of claim 11, wherein the modulator driver comprises a Mach-Zehnder Interferometer, MZI, driver and wherein the tapping is performed at a next to final stage of the MZI driver.

13. The electro-optical transmitter of claim 11 or 12, wherein the calibrating is performed when the electro-optical transmitter is not transmitting data, the operations further comprising:
transmitting a second calibration pattern in the electro-optical transmitter;
identifying a second output for a replica stage in the electro-optical transmitter, the second output generated based on the transmitting the second calibration pattern; and
calibrating, during operation of the electro-optical transmitter, at least one of the ICLK or QCLK based on the identified second output for the replica stage.

14. The electro-optical transmitter of any of claims 11 to 13, wherein on or both of:
A) the one or more memories storing the program comprise firmware used for controlling the calibrating;
B) transmitting the calibration pattern in the electro-optical transmitter comprises identifying a calibration pattern, the calibration pattern comprising a number of bits determined to avoid bandwidth issues for the calibration.

15. A non-transitory computer-readable medium containing computer program code that, when executed by operation of one or more computer processors, causes performance of the method of any of claims 1 to 10.
